# EUROPÄISCHE PATENTSCHRIFT

(11) **EP 3 347 763 B1**
(45) Veröffentlichungstag und Bekanntmachung des Hinweises auf die Patenterteilung: **07.06.2023**
(21) Anmeldenummer: 16766507.4
(22) Anmeldetag: 07.09.2016
(51) Int. Cl.: G02C 7/08, F21V 8/00, G02B 27/01

(54) **LINSENANORDNUNG, INSBESONDERE BRILLENGLASANORDNUNG UND VERFAHREN ZUM HERSTELLEN EINER LINSENANORDNUNG**
LENS ARRANGEMENT, IN PARTICULAR FOR SPECTACLES AND METHOD TO PRODUCE A LENS ARRAGEMENT
AGENCEMENT DE LENTILLES, EN PARTICULIER POUR DES LUNETTES ET MÉTHODE POUR PRODUIRE UN AGENCEMENT DE LENTILLES

(30) Priorität: 07.09.2015 DE 102015114990
(43) Veröffentlichungstag der Anmeldung: 18.07.2018
(73) Patentinhaber: tooz technologies GmbH, 73430 Aalen (DE)
(72) Erfinder: PUETZ, Joerg, 73431 Aalen (DE); PROCHNAU, Jens, 73447 Oberkochen (DE); MESCHENMOSER, Ralf, 73457 Essingen (DE)
(74) Vertreter: Witte, Weller & Partner Patentanwälte mbB
(86) Internationale Anmeldenummer: PCT/EP2016/071030
(87) Internationale Veröffentlichungsnummer: WO 2017/042192

(56) Entgegenhaltungen:
- EP-A1- 1 385 023
- EP-A1- 2 431 790
- EP-A2- 0 614 098
- WO-A1-98/52090
- WO-A1-2015/044305
- US-A- 4 997 268
- US-A- 5 099 360
- US-A1- 2012 057 253
- US-A1- 2012 120 493
- US-A1- 2013 083 404

## Beschreibung

Die vorliegende Erfindung betrifft eine Linsenanordnung wie in Anspruch 1 definiert, insbesondere eine Brillenglasanordnung, mit einem Basislinsenelement, wobei das Basislinsenelement eine erste Oberfläche aufweist, und wobei die erste Oberfläche einen ersten optischen Wirkbereich aufweist. Des Weiteren betrifft die vorliegende Erfindung ein Verfahren zum Herstellen einer Linsenanordnung wie im Anspruch 8 definiert.

Insbesondere kann eine solche Linsenanordnung, insbesondere eine solche Brillenglasanordnung, dazu verwendet werden, für eine auf einen Kopf eines Benutzers aufsetzbare und ein Bild erzeugende Anzeigevorrichtung verwendet zu werden. Insbesondere betrifft die vorliegende Erfindung daher auch eine Anzeigevorrichtung mit einer solchen Brillenglasanordnung.

Derartige Brillenglasanordnungen wurden im Stand der Technik bereits vorgeschlagen. In der Regel weisen derartige Brillengläser einen Einkoppelabschnitt in einem Randbereich der Brillenglasanordnung auf. Des Weiteren ist ein Auskoppelabschnitt in einem Mittelbreich oder Lentikularbereich der Brillenglasanordnung vorgesehen. Das Brillenglas ist dann dazu geeignet, ein Lichtbündel eines erzeugten Bildes, das über den Einkoppelabschnitt in die Brillenglasanordnung eingekoppelt ist, in der Brillenglasanordnung bis zum Auskoppelabschnitt zu führen und über den Auskoppelabschnitt aus dem Brillenglas auszukoppeln. In der Regel wird zur Führung zwischen dem Einkoppelabschnitt und dem Auskoppelabschnitt eine innere Totalreflexion genutzt. Zur Bereitstellung beispielsweise des Auskoppelabschnitts kann eine Fresnel-Oberflächenstruktur bereitgestellt sein.

Ein Beispiel für eine derartigen Linsenanordnung zeigt etwa die Druckschrift DE 10 2013 219 626 A1. Diese Druckschrift zeigt ein Brillenglas für eine auf den Kopf eines Benutzers aufsetzbare und ein Bild erzeugende Anzeigevorrichtung, mit einem eine Vorderseite und eine Rückseite aufweisenden Brillenglaskörper, wobei die Vorderseite und/oder die Rückseite gekrümmt sind/ist und der Brillenglaskörper zumindest einen ersten und einen zweiten Teilkörper aufweist, deren einander zugewandte Grenzflächen in direktem Kontakt stehen, und mit, in Draufsicht auf das Brillenglas gesehen, einem Einkoppelabschnitt in einem Randbereich des Brillenglases und einem Auskoppelabschnitt in einem Mittelbereich des Brillenglases, wobei das Brillenglas dazu geeignet ist, Lichtbündel von Pixeln des erzeugten Bildes, die über den Einkoppelabschnitt des Brillenglases in das Brillenglas eingekoppelt sind, im Brillenglas bis zum Auskoppelabschnitt zu führen und über den Auskoppelabschnitt aus dem Brillenglas auszukoppeln, wobei eine plane erste Reflexionsfläche und eine von der ersten Reflexionsfläche beabstandete plane zweite Reflexionsfläche im Brillenglaskörper vorgesehen sind, die sich jeweils in einer Richtung vom Einkoppelabschnitt zum Auskoppelabschnitt erstrecken und jeweils von der Vorder- und Rückseite des Brillenglaskörpers beabstandet sind, wobei die Lichtbündel durch Reflexionen an den beiden Reflexionsflächen in der Richtung vom Einkoppelabschnitt zum Auskoppelabschnitt geführt sind, und wobei zumindest eine der ersten und zweiten Reflexionsfläche im ersten oder zweiten Teilkörper vorgesehen und in Richtung vom ersten zum zweiten Teilkörper von der Grenzfläche des entsprechenden Teilkörpers versetzt ist.

Bei derartigen Brillenglasanordnungen sind häufig optische Elemente zu fügen. Dabei kann es sein, dass mehrere optische Elemente gefügt werden müssen, beispielsweise mehrere Linsenelemente miteinander oder eine Folie, Schale oder weiteres optisches Element auf ein Linsenelement. Bei einem derartigen Fügen optischer Elemente mit einem Klebstoff sind häufig die Verhältnisse in einem Randbereich entscheidend für den Erfolg des Klebeprozesses. Ist zu viel Klebstoff in einem Klebespalt zwischen den zu fügenden Elementen vorgesehen, tritt der Klebstoff an den Seiten hervor. Ist zu wenig Klebstoff vorgesehen, sind die Randbereiche des Fügeabschnitts nicht optimal gefüllt. Dies kann erhebliche Beeinträchtigungen von Folgeprozessen mit sich bringen, wenn über die Fügefläche keine gleichmäßige Verbindung und Stützung der optischen Elemente vorliegt. Beim Fügen dürfen keinerlei Verunreinigungen während des Fügeprozesses entstehen. Des Weiteren ist das Entstehen von Kavitäten oder nicht komplett benetzten Randbereichen ein Hindernis für nachfolgende Nassbehandlungen. Gegebenenfalls können folgende Bearbeitungsschritte sogar unmöglich werden. Die aufzutragende Klebstoffmenge ist abhängig von einer Spaltbreite, das heißt dem Abstand der zu fügenden Elemente zueinander, den geometrischen Toleranzen der fügenden Elemente und auch der Genauigkeit der Klebstoffapplikation. Aufgrund dieser Vielzahl von Parametern ist der exakte Auftrag der benötigten Klebstoffmenge mit Schwierigkeiten verbunden.

Des Weiteren befindet sich ein voranstehend geschilderter Auskoppelabschnitt, der als Fresnel-Oberflächenstruktur ausgebildet sein kann, innerhalb der Brillenglasanordnung. Die bei der Ausbildung der Fresnel-Oberflächenstruktur notwendigerweise entstehenden Freiräume, im Folgenden als Einschnittbereiche bezeichnet, sind mit einem optisch neutralen Material aufzufüllen, um unerwünschte optische Effekte wie beispielsweise Bildverzerrungen zu vermeiden. Ein solcher Prozess kann unter reduziertem Druck oder unter Überdruck stattfinden, er kann auch in anderen Gasatmosphären stattfinden, wie zum Beispiel in einem inerten Gas, etwa Stickstoff, oder einem anderen Schutzgas. Aufgrund der Form, der geringen Ausmaße und der Geometrie der Fresnel-Flankenerhebungen und den dazwischenliegenden Einschnittbereichen kann es vorkommen, dass sich beim Auffüllen Lufteinschlüsse bilden und/oder das Füllmaterial, das beispielsweise auch ein Klebstoff sein kann, nicht gleichmäßig in die Einschnittbereiche fließt.

Des Weiteren zeigt die Druckschrift US 2012/0120493 A1 einen optischen Wellenleiter.

Des Weiteren zeigt die Druckschrift WO 2015/044305 A1 ein Brillenglas für eine auf den Kopf eines Benutzers aufsetzbare und ein Bild erzeugende Anzeigevorrichtung.

Des Weiteren zeigt die Druckschrift EP 2 431 790 A1 eine elektro-aktiv lichtbrechende Linse und ein Verfahren zum Herstellen derselben.

Des Weiteren zeigt die Druckschrift EP 1 385 023 A1 einen Lichtleiter für eine Anzeigevorrichtung vom head-mounted oder head-up Typ.

Des Weiteren zeigen die Druckschriften US 2012/057253 A1 und US2013083404 jeweils eine Lichtleiterplatte und eine die Lichtleiterplatte aufweisende Anzeigevorrichtung für virtuelle Bilder.

Es ist daher eine Aufgabe der vorliegenden Erfindung, eine Linsenanordnung, insbesondere eine Brillenglasanordnung, oder eine Anzeigevorrichtung mit einer solchen Brillenglasanordnung oder ein Verfahren zum Herstellen einer Linsenanordnung bereitzustellen, wobei die voranstehend beschriebenen Nachteile vermieden werden.

Gemäß einem ersten Aspekt der Erfindung wird daher eine Linsenanordnung, insbesondere eine Brillenglasanordnung, mit einem Basislinsenelement, wobei das Basislinsenelement eine erste Oberfläche aufweist, bereitgestellt, wobei die erste Oberfläche einen Lentikularbereich und einen Randbereich aufweist, wobei der Randbereich den Lentikularbereich umgibt, wobei die erste Oberfläche eine langgestreckte Ausnehmung aufweist, wobei die langgestreckte Ausnehmung den ersten optischen Wirkbereich zumindest teilweise umgibt, und wobei die langgestreckte Ausnehmung angrenzend an den Lentikularbereich verläuft.

Unter dem "optischen Wirkbereich" ist dabei der Bereich der Linsenanordnung bzw. der Brillenglasanordnung zu verstehen, der eine vorgesehene optische Wirkung bereitstellt. Beispielsweise kann der optische Wirkbereich ein Mittelbereich oder Lentikularbereich sein. Bezüglich des Begriffes des "Lentikularbereichs" wird auch auf die Norm DIN EN ISO 13666:1998, Abschnitt 13.2 verwiesen. Dort wird der Begriff "Lentikularteil" definiert, wonach dieses der Teil eines Lentikularglases ist, der die vorgeschriebene dioptrische Wirkung aufweist. Dieser Lentikularteil oder der Lentikularbereich wird von einem Randbereich bzw. Tragrand zumindest teilweise umgeben. Im Rahmen der vorliegenden Erfindung kann der "Lentikularbereich" oder "Mittelbereich" auch eine Nullwirkung aufweisen. Es handelt sich bei dem Lentikularbereich oder Mittelbereich um denjenigen Bereich der Linsenanordnung, der dazu vorgesehen ist, dass ein Träger einer die Linsenanordnung aufweisenden Brille durch ihn hindurchblickt. Es kann der optische Wirkbereich aber beispielsweise auch ein Fresnel-Oberflächenbereich sein. Dieser kann eine gewünschte optische Wirkung als Auskoppelabschnitt zum Auskoppeln einer innerhalb der Brillenglasanordnung per Totalreflexion übertragenen Strahlung aufweisen. Der optische Wirkbereich ist somit derart ausgebildet, dass er eine vordefinierte optische Wirkung des Basislinsenelements in der Linsenanordnung bereitstellt.

Insbesondere kann es sich bei der Linsenanordnung bzw. der Brillenglasanordnung um ein ungerandetes Brillenglas oder um ein gerandetes Brillenglas handeln, d.h. um ein Brillenglas vor oder nach der Randbearbeitung, vgl. insbesondere auch die Abschnitte 8.4.7 und 8.4.8 der Norm DIN EN ISO 13666:1998.

Bei der Linsenanordnung des ersten Aspekts ist der Lentikularbereich mit einem weiteren optischen Element, insbesondere eine Schale oder eine Folie, vollständig bedeckt, wobei das weitere optische Element an dem Lentikularbereich mittels eines Klebstoffabschnitts angebracht ist, und wobei sich der Klebstoffabschnitt über den Lentikularbereich hinaus bis in die langgestreckte Ausnehmung erstreckt. Durch ein gebildetes Ausgleichsreservoir an zu viel aufgetragenem Klebstoff in der langgestreckten Ausnehmung wird verhindert, dass im Falle eines Zurückziehens des Klebstoffs, zum Beispiel infolge von Schrumpfung oder thermischer Ausdehnung, Luft in einen Fügespalt eindringt.

Ein solches weiteres optisches Element, insbesondere eine Schale oder Folie, kann aufgebracht werden, beispielsweise um eine weitere optische Wirkungskomponente zu erzielen. Sie kann auch zum Abdecken oder Schützen der Linsenanordnung dienen.

Mittels der langgestreckten Ausnehmung wird es somit möglich, zum einen im Falle eines Fügens zweier optischer Elemente der Linsenanordnung eine überschießende Menge an Klebstoff auf das Basislinsenelement aufzutragen. Die langgestreckte Ausnehmung ist dazu in der Lage, den zu viel aufgetragenen Klebstoff aufzunehmen. Insofern kann im Falle eines Fügens mittels Klebstoff gezielt etwas zu viel Klebstoff aufgetragen werden, um hinsichtlich des Klebstoffauftrags auf der "sicheren Seite" zu sein. Das Auftragen von zu wenig Klebstoff kann unter Umständen deutlich kritischer sein, da hier gegebenenfalls eine aufgetragene Folie oder optisches Element im Randbereich eine zu geringe oder keine Festigkeit aufweist. Dies kann beispielsweise die Wahrscheinlichkeit, dass eine auf die Folie aufgetragene Beschichtung leicht beschädigt wird oder abplatzt, stark erhöhen. Das gezielte Auftragen von etwas zu viel Klebstoff stellt zumindest den Klebstoffauftrag über den gesamten zu fügenden Bereich sicher. Durch das so gebildete Reservoir an Klebstoff in der langgestreckten Ausnehmung kann des Weiteren verhindert werden, dass im Falle eines Zurückziehens des Klebstoffs, zum Beispiel infolge von Schrumpfung, thermische Ausdehnung, Luft in den Fügespalt eindringt. Der zu viel aufgetragene Klebstoff kann also ein Ausgleichreservoir bilden. Durch eine geeignete, im Folgenden zu erläuterte Ausgestaltung der langgestreckten Ausnehmung kann darüber hinaus vermieden werden, dass durch den zu viel aufgetragenen Klebstoff Lufteinschlüsse oder Ähnliches in der langgestreckten Ausnehmung auftreten. So kann eine Klebstoffschicht hinsichtlich ihrer optischen Eigenschaften neutral wirken. Grundsätzlich sollte die langgestreckte Ausnehmung jedoch so ausgelegt sein, dass sie möglichst vollständig mit Klebstoff gefüllt wird. Es sollen somit keine Lücken oder Hinterschnitte auftreten.

Auch im Falle der Ausgestaltung des optischen Wirkbereichs als Fresnel-Oberflächenbereich können ähnliche Vorteile mit der langgestreckten Ausnehmung erzielt werden. Da diese die Einschnittbereiche miteinander verbindet, wird ein einzelnes Befüllen der Einschnittbereiche vermieden bzw. überflüssig. Wiederum kann durch vollständiges Auffüllen der Einschnittbereiche, so dass ein Füllmaterial oder ein Klebstoff aus den Einschnittbereichen in die langgestreckte Ausnehmung tritt, das Auftreten von Lufteinschlüssen innerhalb der Einschnittbereiche, insbesondere am Anfang und am Ende der Fresnelstrukturen, vermieden werden. Die Luft wird während des Einfüllens des Klebstoffs in die langgestreckte Ausnehmung hinausgedrückt. Das Verbinden sämtlicher Einschnittbereiche mittels der langgestreckten Ausnehmung macht des Weiteren einen Klebstoffausgleich zwischen den Einschnittbereichen möglich, so dass es auf die genaue Füllmenge eines einzelnen Einschnittbereichs nicht mehr ankommt. Die Ausgestaltung der Tiefe der langgestreckten Ausnehmung in die Oberfläche des Basislinsenelements größer als eine Tiefe oder gleich einer Tiefe der Einschnittbereiche in die Oberfläche des Basislinsenelements stellt zudem sicher, dass tatsächlich jegliche Lufteinschlüsse, auch an einem Grund eines Einschnittbereichs, in die Ausnehmung hinausgedrückt werden können.

Der durch die langgestreckte Ausnehmung bereitgestellte Auffangbereich ermöglicht es somit, Variationen der Klebstoffmenge zu kompensieren und den Füllvorgang zu beschleunigen. Die durch gewisse Toleranzen in einer Spaltdicke, Bauteiltoleranzen oder die aufgebrachte Klebstoffmenge hervorgerufenen Variationen werden so ausgeglichen. Mögliche Klebstoffe für Linsenanordnungen können beispielsweise Acrylate, Polyurethane, Epoxythiole, Epoxyamine oder Silikone sein.

Im Falle der Ausgestaltung des optischen Wirkbereichs als Fresnel-Oberflächenbereich ist somit gewährleistet, dass der Klebstoff oder das Füllmaterial bis auf den Grund der Einschnittbereiche fließen kann und auch die Ränder der Einschnittbereiche ausreichend gut gefüllt sind. Beim Applizieren des Füllmaterials bzw. des Klebstoffs schiebt der Klebstoff die Luft entlang der Fresnel-Oberflächenstruktur in die langgestreckte Ausnehmung. Es kann vorgesehen sein, dass die mit dem Klebstoff bzw. dem Füllmaterial zu benetzenden Bereiche vorher beispielsweise mit Plasma aktiviert werden, damit eine bessere Benetzung mittels des Füllmaterials oder des Klebstoffs erfolgen kann. Letztlich kann durch Anpassen der Viskosität des Klebers, durch Zugabe entsprechender Additive oder Fließhilfsmittel sowie durch Anpassen der Temperatur des Klebstoffs während der Applikation oder auch der Temperatur des Bauteils während der Applikation das Benetzungsverhalten und Fließverhalten des Klebstoffs angepasst und verbessert werden. Des Weiteren kann vorgesehen sein, dass nach dem Füllen des Fresnel-Oberflächenbereichs die langgestreckte Ausnehmung weiterhin mit dem Füllmaterial gefüllt wird. Auf diese Weise kann beispielsweise auch ein Übergang des Fresnel-Oberflächenbereichs zu einem umgebenden Bereich einer Linsenanordnung derart ausgestaltet sein, dass der Übergang für einen Nutzer der Linsenanordnung nicht mehr erkennbar ist und keine optische Verzerrung auftritt. Dies kann beispielsweise bereitgestellt werden, indem zum Auffüllen ein Material mit einem Brechungsindex verwendet wird, der im Wesentlichen dem des Materials der Linsenanordnung entspricht. Radien in der langgestreckten Ausnehmung ermöglichen ein sauberes Befüllen der kompletten Struktur mit einem Füllstoff und verringern das Risiko von Lufteinschlüssen.

Beispielsweise im Fall einer Ausbildung des optischen Wirkbereichs als Fresnel-Oberflächenbereich kann vorgesehen sein, dass die langgestreckte Ausnehmung angrenzend an Lentikularbereich verläuft. Im Falle einer Ausbildung des optischen Wirkbereichs als Lentikularbereich oder Mittelbereich kann dies ebenfalls vorgesehen sein, ist jedoch nicht zwingend notwendig. Die langgestreckte Ausnehmung kann beispielsweise auch nur abschnittsweise angrenzend an den optischen Wirkbereich bereitgestellt sein. Auch kann zwischen der langgestreckten Ausnehmung und dem optischen Wirkbereich ein Übergangsbereich vorhanden sein. Über diesen tritt ein Klebstoff dann von dem optischen Wirkbereich in die langgestreckte Ausnehmung ein.

Des Weiteren wird ein Verfahren zum Herstellen einer Linsenanordnung gemäß einem dritten Aspekt der Erfindung bereitgestellt, mit den folgenden Schritten: Bereitstellen eines Basislinsenelements mit einer ersten Oberfläche, wobei die erste Oberfläche einen Lentikularbereich, einen Randbereich und eine langgestreckte Ausnehmung aufweist, wobei der Randbereich den Lentikularbereich umgibt, und wobei die langgestreckte Ausnehmung angrenzend an den Lentikularbereich verläuft und den Lentikularbereich zumindest teilweise umgibt; Aufbringen eines flüssigen Klebstoffs auf den Lentikularbereich, so dass der Klebstoff den Lentikularbereich vollständig bedeckt und sich bis in die langgestreckte Ausnehmung erstreckt und/oder Aufbringen des flüssigen Klebstoffs auf ein den Lentikularbereich vollständig bedeckendes weiteres optisches Element, insbesondere eine Schale oder eine Folie; Aufbringen des den Lentikularbereich vollständig bedeckenden weiteren optischen Elements, insbesondere der Folie oder der Schale, auf das Basislinsenlement, wobei durch ein gebildetes Ausgleichsreservoir an zu viel aufgetragenem Klebstoff in der langgestreckten Ausnehmung verhindert wird, dass im Falle eines Zurückziehens des Klebstoffs, zum Beispiel infolge von Schrumpfung oder thermischer Ausdehnung, Luft in einen Fügespalt eindringt; und Aushärten des Klebstoffs.

Letztlich kann gemäß einem dritten Aspekt eine Anzeigevorrichtung mit zumindest einer Linsenanordnung gemäß dem ersten Aspekt oder einer seiner Ausgestaltungen bereitgestellt sein.

Die eingangs gestellte Aufgabe wird somit vollkommen gelöst.

In einer Ausgestaltung der Linsenanordnung kann vorgesehen sein, dass das Basislinsenelement eine Vorderfläche, eine Rückfläche und eine Randfläche aufweist, und wobei die erste Oberfläche die Vorderfläche oder die Rückfläche des Basislinsenelements ist.

Bei der vorliegenden Linsenanordnung oder Brillenglasanordnung ist die Vorderfläche des Basislinsenelements die von einem Nutzer abgewandte Seite des Linsenelements. Entsprechend ist die Rückfläche die dem Nutzer zugewandte Seite des Linsenelements. Die Verwendung erfolgt entsprechend der Norm DIN EN ISO 13666:1998, Abschnitt 5.8 "Vorderfläche". Demgemäß ist die Vorderfläche die bestimmungsgemäß in der Brille vom Auge abgewandte Fläche. Entsprechend gilt für die Rückfläche gemäß Abschnitt 5.9, dass dieses die bestimmungsgemäß in der Brille dem Auge zugewandte Seite ist.

Entsprechend ist die Randfläche die diese Fläche verbindenden Fläche, an der üblicherweise letztendlich die Fassung der Brille angebracht wird. Bei der Oberfläche handelt es sich folglich um die Vorderfläche oder die Rückfläche des Basislinsenelements, die die gewünschte optische Wirkung bereitstellen. Im Falle der Ausgestaltung des optischen Wirkbereichs als Lentikularbereich kann dieses insbesondere eine verschriebene Wirkung sein.

In einer weiteren Ausgestaltung der Linsenanordnung kann vorgesehen sein, dass das Basislinsenelement einstückig ausgebildet ist.

Beispielsweise kann das Basislinsenelement durch Gießen und entsprechende Nachbearbeitung, beispielsweise durch Schleifen und/oder Polieren und/oder Fräsen ausgebildet sein. Auch ein Spritzgussverfahren und/oder das Abformen gegen eine Formschale kann Anwendung finden. Grundsätzlich kann es sich aber auch um ein mehrteiliges Basislinsenelement handeln.

In einer weiteren Ausgestaltung der Linsenanordnung kann vorgesehen sein, dass die langgestreckte Ausnehmung den ersten optischen Wirkbereich vollständig umgibt.

Insbesondere bei der Ausgestaltung des optischen Wirkbereichs als Lentikularbereich kann vorgesehen sein, dass die langgestreckte Ausnehmung diesen vollständig, das heißt vollumfänglich, umgibt. Dies ist jedoch nicht zwingend notwendig. Beispielsweise kann auch vorgesehen sein, dass die langgestreckte Ausnehmung den Lentikularbereich über 180° oder mehr als 180° oder mehr als 270° umgibt.

In einer weiteren Ausgestaltung der Linsenanordnung kann vorgesehen sein, dass die langgestreckte Ausnehmung ein konstantes Querschnittsprofil quer zu ihrer Längserstreckung aufweist.

Auf diese Weise kann die langgestreckte Ausnehmung besonders einfach beispielsweise durch einen Fräsvorgang bereitgestellt werden. Auch ein Herstellen mittels Gießen oder Spritzgießen oder auf eine andere geeignete Herstellungsart ist aber möglich. Auch das Fließverhalten eines Klebstoffs oder Füllmaterials in einer langgestreckten Ausnehmung ist dann über dessen Längserstreckung gleichmäßig.

In einer weiteren Ausgestaltung der Linsenanordnung kann vorgesehen sein, dass die langgestreckte Ausnehmung ein sich entlang ihrer Längserstreckung veränderndes Querschnittsprofil quer zu ihrer Längserstreckung aufweist.

Auf diese Weise ist es beispielsweise möglich, das Querschnittsprofil an eine Menge des aufzunehmenden Klebstoffs anzupassen. Da der optische Wirkbereich nicht zwingend kreisförmig ausgestaltet sein muss, kann eine Menge des überschießenden Klebstoffs über einen Umfang des optischen Wirkbereichs variieren. Dieses kann mit einem sich verändernden Querschnittsprofil kompensiert werden.

In einer weiteren Ausgestaltung der Linsenanordnung kann vorgesehen sein, dass eine Umfangskontur des optischen Wirkbereichs kreisförmig ist.

Insbesondere bei der Ausgestaltung des optischen Wirkbereichs eines Lentikularbereich oder Mittelbereich kann dies der Fall sein. Es kann jedoch auch sein, dass die Umfangskontur lediglich ein Teilabschnitt eines Kreises ist. Beispielsweise wenn eine Seite des Basislinsenelements abgeflacht ausgebildet ist.

In einer weiteren Ausgestaltung der Linsenanordnung kann vorgesehen sein, dass eine Umfangskontur des optischen Wirkbereichs rechteckig ist.

Insbesondere bei der Ausgestaltung des optischen Wirkbereichs als Fresnel-Oberflächenbereich kann dies vorgesehen sein. Daraus kann sich dann der Vorteil ergeben, dass die langgestreckte Ausnehmung gerade an zumindest einer Seite des Rechtecks verlaufen kann.

In einer weiteren Ausgestaltung der Linsenanordnung kann vorgesehen sein, dass, insbesondere wobei der erste optische Wirkbereich eine sphärische Fläche, eine asphärische Fläche oder eine zylindrische Fläche ist.

Wie bereits voranstehend ausgeführt, kann dieser Lentikularbereich oder Mittelbereich die gewünschte Verschreibung eines Nutzers der Linsenanordnung oder Brillenglasanordnung umsetzen. Beispielsweise bei einer Korrektur zweiter Ordnung kann dies über eine sphärische, asphärische oder zylindrische Fläche umgesetzt werden. Diese sind darüber hinaus einfach mittels spanabhebender Bearbeitung bereitzustellen. Wie voranstehend ausgeführt ist jedoch auch ein Gießen oder Spritzgießen oder eine andere geeignete Herstellungsart möglich.

In einer weiteren Ausgestaltung der Linsenanordnung kann vorgesehen sein, dass der erste optische Wirkbereich ein Fresnel-Oberflächenbereich mit einer Fresnel-Oberflächenstruktur ist.

Auf diese Weise lässt sich, wie ebenfalls bereits voranstehend beschrieben wurde, beispielsweise ein Auskoppelabschnitt oder ein Einkoppelabschnitt in der Linsenanordnung unter Zuhilfenahme eines Basislinsenelements bereitstellen. Der Fresnel-Oberflächenbereich ist dann entsprechend seinen Flanken derart ausgebildet, dass eine gewünschte Strahlumlenkung um einen bestimmten Winkel erfolgt, so dass die Strahlung in die Totalreflexion eingekoppelt bzw. aus dieser ausgekoppelt wird.

In einer weiteren Ausgestaltung der Linsenanordnung kann vorgesehen sein, dass der Fresnel-Oberflächenbereich eine Mehrzahl von Fresnel-Flankenerhebungen mit dazwischenliegenden Einschnittbereichen aufweist, und wobei die Fresnel-Flankenerhebungen beschichtet sind.

Beispielsweise kann vorgesehen sein, die Fresnel-Flankenerhebungen zu beschichten, um einen gewünschten Reflexionsgrad zu erzielen. Die Fresnel-Flankenerhebungen können also beispielsweise mit einer Reflexionsbeschichtung versehen sein.

In einer weiteren Ausgestaltung der Linsenanordnung kann vorgesehen sein, dass eine Umfangskontur des ersten optischen Wirkbereichs rechteckig ist, und wobei die langgestreckte Ausnehmung den optischen Wirkbereich nur an drei Seiten der rechteckigen Umfangskontur umgibt.

Auf diese Weise wird die langgestreckte Ausnehmung besonders vorteilhaft genutzt. Insbesondere bei der Ausbildung des optischen Wirkbereichs als Fresnel-Oberflächenbereich kann die Anordnung einer langgestreckten Ausnehmung derart erfolgen, dass die Einschnittbereiche zwischen den Flankenbereichen der Fresnel-Oberflächenstruktur an ihren beiden offenen Enden von der langgestreckten Ausnehmung verbunden werden. Durch die Anordnung der langgestreckten Ausnehmung auch an der dritten Seite werden wiederum die die Einschnittbereiche verbindenden Abschnitte der langgestreckte Ausnehmung miteinander verbunden. Über die gesamte langgestreckte Ausnehmung und den Fresnel-Oberflächenbereich kann so ein Niveauausgleich des Füllmaterials oder des Klebstoffs erfolgen und die Luft vollständig verdrängt werden.

In einer weiteren Ausgestaltung der Linsenanordnung kann vorgesehen sein, dass der Fresnel-Oberflächenbereich eine Mehrzahl von Fresnel-Flankenerhebungen mit dazwischenliegenden Einschnittbereichen aufweist, und wobei eine Tiefe der langgestreckten Ausnehmung größer als eine Tiefe der Einschnittbereiche ist oder gleich einer Tiefe der Einschnittbereiche ist.

Auf diese Weise wird sichergestellt, dass Lufteinschlüsse an einem Grund eines Einschnittbereichs vermieden werden können, da die Luft von dort nach außen in die langgestreckte Ausnehmung herausgedrückt werden kann, wenn ein Füllmaterial in die Einschnittbereiche appliziert wird.

In einer weiteren Ausgestaltung kann vorgesehen sein, dass die langgestreckte Ausnehmung ein Querschnittsprofil quer zu ihrer Längserstreckung aufweist, und wobei ein minimaler Radius des Querschnittprofils größer oder gleich 0,05 mm ist. Insbesondere kann der minimale Radius größer oder gleich 0,1 mm, 0,15 mm oder 0,2 mm sein.

Auf diese Weise kann eine vollständige Füllung des Querschnittprofils der langgestreckten Ausnehmung sichergestellt und das Auftreten von Lufteinschlüssen vermieden werden.

In einer weiteren Ausgestaltung der Linsenanordnung kann vorgesehen sein, dass der Fresnel-Oberflächenbereich von einem Füllmaterialabschnitt bedeckt ist, und wobei sich der Füllmaterialabschnitt bis in die langgestreckte Ausnehmung erstreckt.

Bei der derart ausgebildeten Linsenanordnung ist sichergestellt, dass der Fresnel-Oberflächenbereich vollständig von dem Füllmaterialabschnitt bedeckt ist, und während des Applizierens des Füllmaterials gezielt mehr Füllmaterial eingebracht wurde, als für das reine Ausfüllen des Fresnel-Oberflächenbereichs benötigt wäre, so dass sich ein Teil des Füllmaterialabschnitts bis in die langgestreckte Ausnehmung erstreckt. Auf diese Weise ist des Weiteren sichergestellt, dass etwaige Lufteinschlüsse in dem Fresnel-Oberflächenbereich durch das Füllmaterial hinausgedrückt wurden. Der Füllmaterialabschnitt ist somit das ausgehärtete Füllmaterial bzw. der ausgehärtete Klebstoff.

In einer weiteren Ausgestaltung der Linsenanordnung kann vorgesehen sein, dass das Basislinsenelement aus einem Basislinsenmaterial ausgebildet ist, wobei der Füllmaterialabschnitt aus einem von dem Basislinsenmaterial verschiedenen Füllmaterial ausgebildet ist, und wobei ein Brechungsindex des Basislinsenmaterials und ein Brechungsindex des Füllmaterials bei derselben Referenzwellenlänge identisch ist. Leichte Abweichungen innerhalb üblicher Toleranzen, beispielsweise in einem Bereich des Brechungsindex von 0,001, sind dabei noch als identisch anzusehen.

Beispielsweise kann als Referenzwellenlänge 546,074 nm verwendet werden, das heißt die e-Linie. Beispielsweise kann hier das Material Mitsui MR-8 mit einem Brechungsindex nₑ = 1,60 genutzt werden zusammen mit einem Füllmaterial oder Klebstoff aus einem Epoxythiol, das ebenfalls einen solchen Brechungsindex von nₑ von 1,60 aufweist.

Erstreckt sich der Klebstoffabschnitt über den Lentikularbereich hinaus bis in die langgestreckte Ausnehmung ist sichergestellt, dass die Folie vollständig von dem Klebstoffabschnitt gestützt ist. Die Folie steht nicht über den Klebstoffabschnitt hinaus, so dass sie nicht an ihren Randbereichen beschädigt werden kann und keine Hohlräume oder Hinterschneidungen aufweist.

In einer weiteren Ausgestaltung der Linsenanordnung kann vorgesehen sein, dass der Klebstoffabschnitt die langgestreckte Ausnehmung vollständig ausfüllt.

Es kann somit vorgesehen sein, dass die den Lentikularbereich zumindest teilweise umgebende langgestreckte Ausnehmung gezielt vollständig ausgefüllt wird, insbesondere bei einer späteren Nassbehandlung kann dies vorteilhaft sein, insbesondere da keine Flüssigkeitsrückstände in der langgestreckten Ausnehmung auftreten können.

In einer weiteren Ausgestaltung der Linsenanordnung kann vorgesehen sein, dass die langgestreckte Ausnehmung eine erste langgestreckte Ausnehmung ist, und wobei die erste Oberfläche des Weiteren eine zweite langgestreckte Ausnehmung aufweist, und wobei die zweite langgestreckte Ausnehmung angrenzend an den ersten optischen Wirkbereich gegenüberliegend zu der ersten langgestreckten Ausnehmung verläuft.

Insbesondere im Fall einer Ausbildung des optischen Wirkbereichs als Fresnel-Oberflächenbereich mit rechteckiger Kontur kann dies vorgesehen sein. Dann kann eine langgestreckte Ausnehmung zu beiden Seiten der Fresnel-Flankenbereich und der Einschnittbereiche ausgebildet sein. Die langgestreckten Ausnehmungen sind dann an den offenen Enden der Einschnittbereiche angeordnet.

In einer weiteren Ausgestaltung der Linsenanordnung kann vorgesehen sein, dass in dem Lentikularbereich ein Fresnel-Oberflächenbereich angeordnet ist, wobei die langgestreckte Ausnehmung, die angrenzend an Lentikularbereich verläuft und den Lentikularbereich zumindest teilweise umgibt, eine erste langgestreckte Ausnehmung ist, und wobei angrenzend an den Fresnel-Oberflächenbereich eine zweite langgestreckte Ausnehmung verläuft und den Fresnel-Oberflächenbereich zumindest teilweise umgibt.

Es kann somit ein Fresnel-Oberflächenbereich in dem Lentikularbereich angeordnet sein.

Es kann somit kumulativ vorgesehen sein, dass sowohl der Lentikularbereich von einer langgestreckte Ausnehmung zumindest teilweise umgeben wird. Darüber hinaus kann auch die in dem Lentikularbereich angeordnete Fresnel-Oberflächenstruktur von einer weiteren langgestreckten Ausnehmung zumindest teilweise umgeben sein. Die voranstehend beschriebenen Vorteile ergeben sich dann für beide Anwendungsfälle des optischen Wirkbereichs.

In einer weiteren Ausgestaltung kann vorgesehen sein, dass der Fresnel-Oberflächenbereich von einem Füllmaterialabschnitt bedeckt ist, wobei eine Oberfläche des Füllmaterialabschnitts in einer Oberfläche des Lentikularbereichs kontinuierlich ineinander übergehen.

Auf diese Weise kann der Füllmaterialabschnitt, nachdem er ausgehärtet ist, dazu dienen, die Oberfläche des Lentikularbereichs kontinuierlich bereitzustellen. Der kontinuierliche Übergang kann beispielsweise durch Schleifen und/oder Polieren und/oder Fräsen bereitgestellt werden. Auch ein Gießen, Spritzgießen und/oder ein Abformen gegen eine Formschale ist möglich. Insbesondere kann auf diese Weise eine optische Wirkung des Lentikularbereichs aufgrund des optisch "neutralen", das heißt mit demselben Brechungsindex ausgebildeten Füllmaterials, über den gesamten Lentikularbereich bereitgestellt werden. "Kontinuierlich" soll hier als stetig differenzierbarer Flächenverlauf verstanden werden. Mit anderen Worten ohne einen Knick an dem Übergang.

Bei den beanspruchten Linsenanordnung und Herstellungsmethode ist es vorgesehen, dass der Lentikularbereich mit einem weiteren optischen Element, insbesondere einer Schale oder einer Folie, bedeckt ist, wobei das weitere optische Element an dem Lentikularbereich mittels eines Klebstoffabschnitts angebracht ist.

Es kann somit sowohl der Lentikularbereich mit der langgestreckten Ausnehmung versehen sein, als auch ein Fresnel-Oberflächenbereich in dem Lentikularbereich vorgesehen sein, der mittels des Füllmaterials bedeckt und von einer weiteren langgestreckten Ausnehmung umgeben ist. Dabei kann vorgesehen sein, dass des Weiteren ein weiteres optisches Element, insbesondere eine Folie, den Lentikularbereich und damit auch den Fresnel-Oberflächenbereich bedeckt. Genauer gesagt wird mittels des weiteres optischen Elements dann der auf dem Fresnel-Oberflächenbereich aufgetragene Füllmaterialabschnitt von dem weiteren optischen Element bedeckt.

In einer weiteren Ausgestaltung des Verfahrens zum Herstellen einer Linsenanordnung kann vorgesehen sein, dass nach dem Schritt des Aufbringens des flüssigen Klebstoffs auf den Lentikularbereich ein weiterer Schritt des Füllens der langgestreckten Ausnehmung mit dem Klebstoff erfolgt.

Auf diese Weise kann gezielt das Verfahren gemäß dem dritten Aspekt derart weitergebildet werden, dass wie voranstehend beschrieben die langgestreckte Ausnehmung um den Lentikularbereich herum vollständig mit Klebstoff bedeckt ist, was insbesondere bei anschließenden Nassbehandlungen aufgrund der vollständig gefüllten langgestreckten Ausnehmung vorteilhaft ist.

Auch in einer Ausgestaltung des Verfahrens gemäß dem dritten Aspekt kann vorgesehen sein, dass die langgestreckte Ausnehmung angrenzend an den ersten optischen Wirkbereich verläuft.

Die langgestreckte Ausnehmung kann beispielsweise nur abschnittsweise angrenzend an den optischen Wirkbereich bereitgestellt sein. Auch kann zwischen der langgestreckten Ausnehmung und dem optischen Wirkbereich ein Übergangsbereich vorhanden sein. Über diesen tritt ein Klebstoff dann von dem optischen Wirkbereich in die langgestreckte Ausnehmung ein.

Auch in dem Verfahren gemäß dem vierten Aspekt der Erfindung kann vorgesehen sein, dass die langgestreckte Ausnehmung nach dem Aushärten des Füllmaterials gezielt vollständig mit dem Füllmaterial gefüllt wird. Insbesondere kann dies geschehen, um einen kontinuierlichen Oberflächenübergang zwischen dem Fresnel-Oberflächenbereich und einem ebenfalls angrenzenden Lentikularbereich bereitzustellen. Auf diese Weise können beispielsweise optische Wirkungssprünge vermieden werden.

In einer weiteren Ausgestaltung des Verfahrens gemäß dem vierten Aspekt kann vorgesehen sein, dass des Weiteren ein Schritt des Schleifens und/oder Polierens und/oder Fräsens des Füllmaterials erfolgt, so dass eine Oberfläche des Füllmaterials und eine Oberfläche des Lentikularbereichs kontinuierlich ineinander übergehen.

Auch dies vermeidet optische Wirkungssprünge und erleichtert nachfolgende Prozessschritte an dem Basislinsenelement.

In einer weiteren Ausgestaltung des Verfahrens gemäß dem vierten Aspekt kann vorgesehen sein, dass vor dem Schritt des Aushärtens ein Aufbringen eines den Fresnel-Oberflächenbereich vollständig bedeckenden weiteren optischen Elements, insbesondere einer Schale oder einer Folie, erfolgt.

Auch hier kann somit das Aufbringen eines weiteren optischen Elements, beispielsweise einer Schale oder einer Folie, erfolgen, insbesondere derart, dass es den Fresnel-Oberflächenbereich vollständig bedeckt.

In einer weiteren Ausgestaltung des Verfahrens gemäß dem vierten Aspekt kann vorgesehen sein, dass während des Schritts des Füllens ein Direktabformen des Klebstoffs erfolgt, insbesondere gegen eine entfernbare Formschale.

Es können also Gießverfahren oder andere geeignete Applikationsverfahren zum Aufbringen des Klebstoffs genutzt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
- Fig. 1: eine schematische Ansicht einer Anzeigevorrichtung mit zumindest einer Linsenanordnung gemäß der vorliegenden Erfindung,
- Fig. 2: eine schematische Querschnittsansicht einer beispielhaften Ausgestaltung einer Linsenanordnung,
- Fig. 3: eine schematische Querschnittsansicht eines Basislinsenelements einer Linsenanordnung gemäß der vorliegenden Erfindung,
- Fig. 4: eine weitere Ausgestaltung eines Basislinsenelements,
- Fig. 5: noch eine weitere Ausgestaltung eines Basislinsenelements,
- Fig. 6: eine vergrößerte schematische Ansicht einer langgestreckten Ausnehmung und einer auf ein Basislinsenelement mittels Klebstoff gefügten Folie,
- Fig. 7: eine weitere beispielhafte Ausgestaltung einer auf ein Basislinsenelement mittels eines Klebstoffabschnitt gefügten Folie,
- Fig. 8: eine schematische Querschnittsansicht eines Querschnittsprofils einer langgestreckten Ausnehmung und einer darauf gefügten Folie,
- Figuren 9-11: schematische Draufsichten auf einen Fresnel-Oberflächenbereich,
- Fig. 12: eine schematische Querschnittansicht entlang einer Linie XII-XII der Fig. 10,
- Fig. 13: eine schematische Querschnittsansicht entlang einer Linie XIII-XIII in Fig. 10,
- Fig. 14: ein Ablaufdiagramm eines Verfahrens, und
- Fig. 15: ein Ablaufdiagramm eines weiteren Verfahrens.

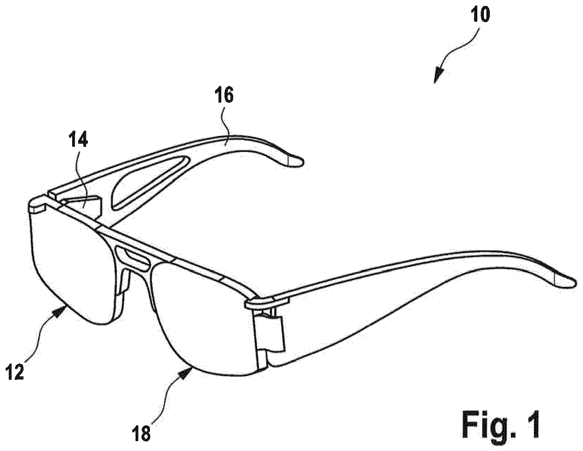

Fig. 1 zeigt eine Brille 10, bei der es sich auch um eine Anzeigevorrichtung zum Anzeigen von Bildern an einem Träger der Brille handeln kann.

Die Brille weist eine Linsenanordnung 12 auf. Bei dieser Linsenanordnung 12 kann es sich um eine Linsenanordnung 12 handeln, über die ein mittels einer Bilderzeugungseinrichtung 14 erzeugtes Bild einem Träger dargestellt wird. Dies ist jedoch nicht in allen Ausgestaltungen zwingend. Es kann sich bei der Linsenanordnung 12 auch um eine Linsenanordnung der Brille 10 handeln, in die kein mittels einer Bilderzeugungseinrichtung 14 erzeugtes Bild eingekoppelt wird. Die Linsenanordnung 12 wird in einer Fassung 16 gehalten. Des Weiteren ist eine zweite Linsenanordnung oder Brillenglasanordnung 18 vorgesehen. Die Linsenanordnung bzw. Brillenglasanordnung 18 kann mit denselben Merkmalen wie die Linsenanordnung 12 ausgestaltet sein. Diese können jedoch auch verschieden ausgestaltet sein. So kann beispielsweise sowohl die Linsenanordnung 12 als auch die zweite Linsenanordnung 18 zum Einkoppeln eines mittels der Bilderzeugungseinrichtung 14 erzeugten Bildes an den Benutzer ausgestaltet sein. Es kann jedoch auch vorgesehen sein, dass nur eine oder wie bereits voranstehend ausgeführt keine der Linsenanordnungen 12, 18 zum Einkoppeln eines mittels einer Bilderzeugungseinrichtung 14 erzeugten Bildes vorgesehen ist. Grundsätzlich kann es sich bei der Brille 10 auch um eine übliche Brille ohne Bilderzeugungseinrichtung handeln.

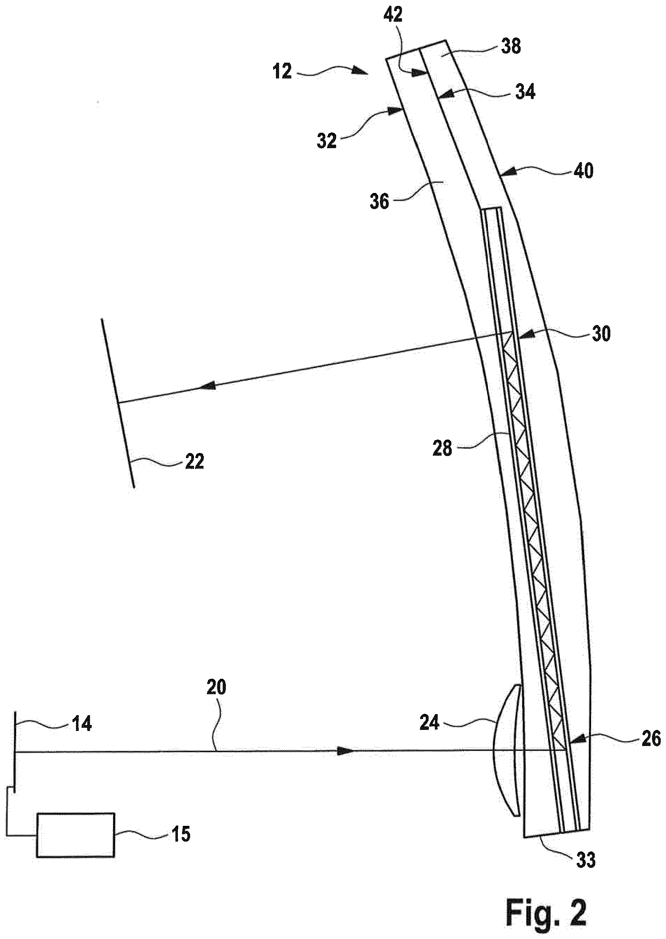

Die Fig. 2 zeigt eine schematische Querschnittsansicht eines Beispiels einer Linsenanordnung 12, die zum Einkoppeln eines mittels der Bilderzeugungseinrichtung 14 erzeugten Bildes vorgesehen ist. Eine Steuerungseinrichtung 15 steuert die Bilderzeugungseinrichtung 14, die einen schematisch durch einen Strahlengang 20 dargestelltes Bild an einen Betrachter 22 überträgt. Hierzu kann beispielsweise eine Einkoppeloptik 24 vorgesehen sein, die mittels eines Einkoppelabschnitts 26 das erzeugte Bild in die Linsenanordnung 12 einkoppelt. Über einen Totalreflexionsbereich 28 verläuft der Strahlengang innerhalb der Linsenanordnung 12 und wird über einen Auskoppelabschnitt 30 an den Träger und Betrachter des Bildes 22 ausgegeben. Die Ausgestaltung des Totalreflexionsbereichs 28 als planparalleler Totalreflexionsbereich 28 ist lediglich die Darstellung eines möglichen Beispiels. Beispielsweise können auch eine Vorderfläche 32 und eine Rückfläche 40 der Linsenanordnung 12 als Flächen der Totalreflexion genutzt werden. Somit können auch die Vorderfläche 32 und die Rückfläche 40 der Linsenanordnung 12 den Totalreflexionsbereich 28 begrenzen. Sowohl beispielsweise der Einkoppelabschnitt 26 als auch der Auskoppelabschnitt 30 können durch Fresnel-Oberflächenstrukturen bereitgestellt sein. Grundsätzlich ist es nicht zwingend, dass der Einkoppelabschnitt 26 und eine Einkoppel-optik 24 wie dargestellt vorgesehen sind. Das Einkoppeln des Strahlengangs 20 kann grundsätzlich auch über eine Randfläche 33 der Linsenanordnung 12 in den Totalreflexionsbereich 28 erfolgen. In diesem Fall kann lediglich eine Fresnel-Oberflächenstruktur in dem Auskoppelabschnitt 30 vorhanden sein.

Die Linsenanordnung 12 weist ein Basislinsenelement 36 auf. Das Basislinsenelement 36 ist lediglich schematisch in der Fig. 2 dargestellt. Das Basislinsenelement weist eine dem Betrachter 22 zugewandte Rückfläche 32 und eine von dem Betrachter abgewandte Vorderfläche 34 auf. Des Weiteren die bereits voranstehend benannte Randfläche 33. Die Linsenanordnung 12 kann über das Basislinsenelement hinaus ein weiteres Element 38 aufweisen. Bei diesem weiteren Element 38 kann es sich um ein weiteres Linsenelement handeln, es kann sich jedoch beispielsweise auch lediglich um eine Folie handeln, die mit dem Basislinsenelement 36 zu verbinden ist. Die Darstellung dieses weiteren Elements 38 ist lediglich schematisch und nicht dimensionsgetreu. Auch die Dimensionen des Totalreflexionsbereichs 28 dienen lediglich der schematischen Veranschaulichung. Das zweite Element kann ebenfalls eine von dem Benutzer 22 abgewandte Vorderfläche 40 und eine dem Benutzer zugewandte Rückfläche 42 aufweisen. Folglich wird die Rückfläche 42 des zweiten Elements 38 auf die Vorderfläche 34 des Basislinsenelements 36 gefügt. Grundsätzlich kann jedoch die Linsenanordnung 12 auch nur das Basislinsenelement 36 aufweisen, dessen Vorderfläche 34 beispielsweise mit einer Beschichtung versehen wird.

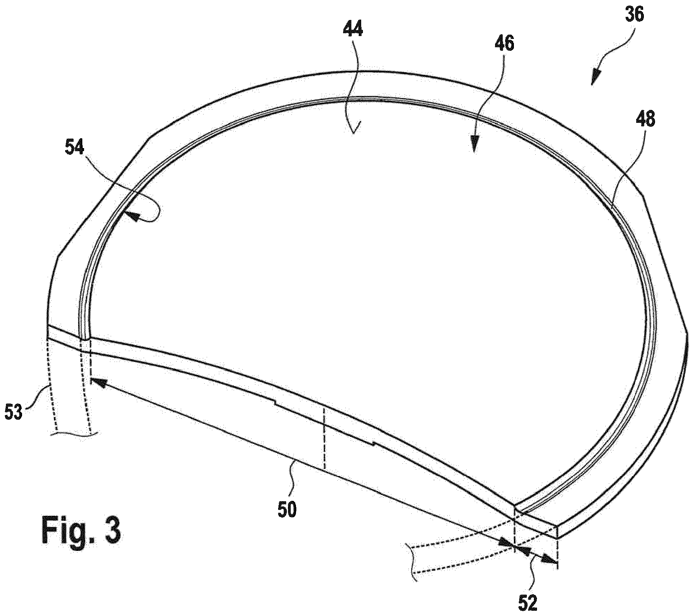

Die Fig. 3 zeigt eine erste Ausführungsform des Basislinsenelements 36.

Das Basislinsenelement 36 weist in der dargestellten Ausführungsform eine erste Oberfläche 44 auf, bei der es sich um die Vorderfläche 34 handelt. Grundsätzlich kann es sich jedoch auch um die Rückfläche 32 handeln. Die erste Oberfläche 44 weist einen optischen Wirkbereich 46 auf. In diesem optischen Wirkbereich wird eine vorgesehene bzw. erwünschte optische Wirkung erzielt. In der in Fig. 3 dargestellten Ausführungsform ist der optische Wirkbereich ein sogenannter Lentikularbereich 50. Das heißt derjenige Bereich, durch den der Nutzer 22 blickt. Der Lentikularbereich 50 wird von dem Randbereich 52 umgeben. Mittels des Randbereichs 52 wird das Basislinsenelement an der Fassung 16 angebracht. Grundsätzlich kann sich der Randbereich 52 um den gesamten Lentikularbereich 50 erstrecken. Aufgrund der abgeschnittenen Formgebung des in der Fig. 3 dargestellten Basislinsenelements kann der Lentikularbereich 50 jedoch auch zu einem Rand des Basislinsenelements 36 offen sein, wie in dem Beispiel der Fig. 3. Der Lentikularbereich 50 wird von einer langgestreckten Ausnehmung 48 umgeben. In einer Draufsicht auf das Basislinsenelement 36 ergibt sich dabei eine Umfangskontur 54, die kreisförmig ist, wobei in dem in der Fig. 3 dargestellten Beispiel der Kreis zu dem Rand hin offen ist. Die Darstellung der geometrischen Form des Basislinsenelements 36 ist lediglich beispielhaft zu verstehen. Das Basiselement kann grundsätzlich auch eine kreisförmige oder ovale Umfangskontur aufweisen, wie durch die gestrichelten Linien 53 angedeutet ist. Gleiches gilt für die Umfangskontur 54 des Lentikularbereichs 50. Wie im Folgenden erläutert wird, kann in diesem Ausführungsbeispiel die langgestreckte Ausnehmung insbesondere dazu dienen, das Fügen eines weiteren optischen Elements, insbesondere einer Folie der Schale, auf die Oberfläche 44 mittels Klebstoffs zu vereinfachen.

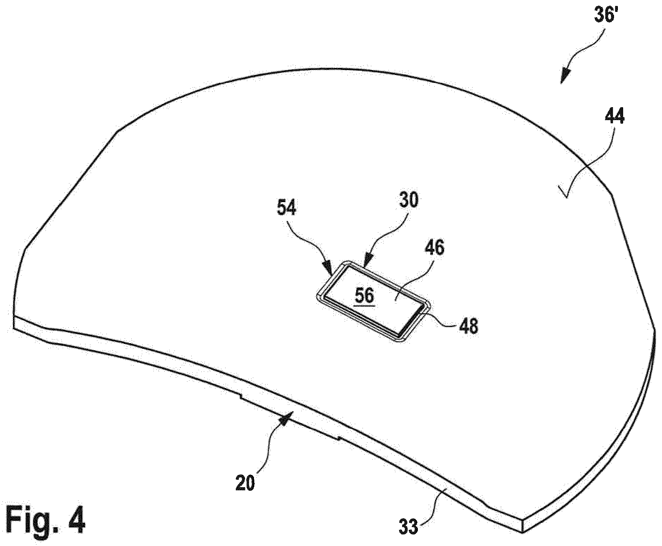

In der Fig. 4 ist eine weitere Ausführungsform des Basislinsenelements dargestellt, die mit 36' bezeichnet ist. Diese Ausführungsform kann insbesondere dazu dienen, die Bereitstellung eines Fresnel-Oberflächenbereichs 56 zu verbessern. Beispielsweise kann in diesem Ausführungsbeispiel ein Strahlengang, wie mittels des Strahlengangs 20 schematisch veranschaulicht, in die Randfläche des Basislinsenelements 36 eingekoppelt werden und mittels des Fresnel-Oberflächenbereichs 56 ausgekoppelt werden, der als Auskoppelabschnitt 30 dient. Folglich bildet hier der Fresnel-Oberflächenbereich 56 den optischen Wirkbereich 46. Dieser weist in einer Draufsicht in dem in Fig. 4 dargestellten Beispiel eine rechteckige Umfangskontur 54 auf. Dies ist jedoch lediglich beispielhaft zu verstehen. Auch jede andere Umfangskontur 54 ist denkbar, beispielsweise eine kreisförmige oder ovale Umfangskontur. In dem dargestellten Ausführungsbeispiel ist die rechteckige Umfangskontur vollständig von der langgestreckten Ausnehmung 48 umgeben. Dies muss jedoch nicht zwingend der Fall sein, wie im Folgenden noch beschrieben werden wird, kann die langgestreckte Ausnehmung 48 auch nur auf ein, zwei oder drei Seiten der rechteckigen Umfangskontur 54 vorgesehen sein. Wie im Folgenden noch erläutert wird, kann hier insbesondere die langgestreckte Ausnehmung dazu dienen, das Auftragen eines Füllmaterials auf den Fresnel-Oberflächenbereich zu vereinfachen.

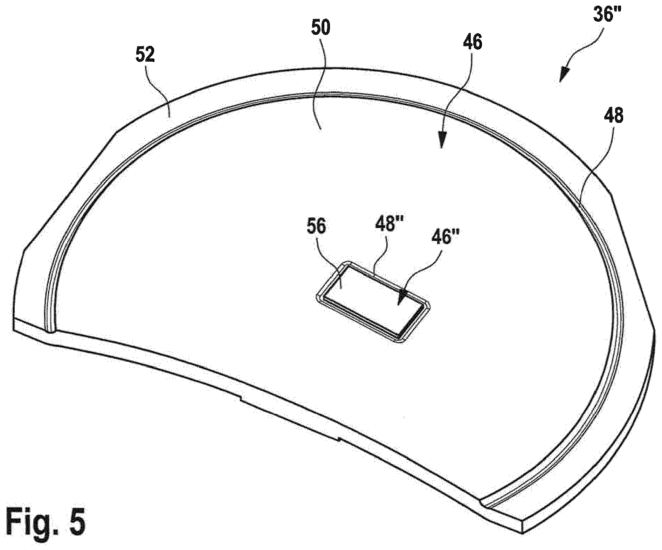

Die Fig. 5 zeigt eine weitere mögliche Ausgestaltung des Basislinsenelements 36. Gleiche Elemente sind mit gleichen Bezugszeichen gekennzeichnet und werden nicht erneut erläutert. In diesem Ausführungsbeispiel sind kumulativ sowohl eine langgestreckte Ausnehmung 48 als auch eine langgestreckte Ausnehmung 48" vorgesehen. In dieser Ausgestaltung weist das Basislinsenelement 36" somit zwei optische Wirkbereiche 46 und 46" auf. In dem Lentikularbereich 50 ist zusätzlich ein Fresnel-Oberflächenbereich 56 vorgesehen. Sowohl der Lentikularbereich 50 ist von einer langgestreckte Ausnehmung 48 umgeben als auch der Fresnel-Bereich 56, der von der langgestreckte Ausnehmung 48" umgeben ist. Insbesondere in dieser Ausführungsform kann mittels der langgestreckte Ausnehmungen 48 und 48" zunächst das Aufbringen eines Füllmaterials auf den Fresnel-Oberflächenbereich 56 erleichtert und dann das anschließende Fügen einer Folie auf den Lentikularbereich 50 und über den Fresnel-Oberflächenbereich 56 erleichtert werden.

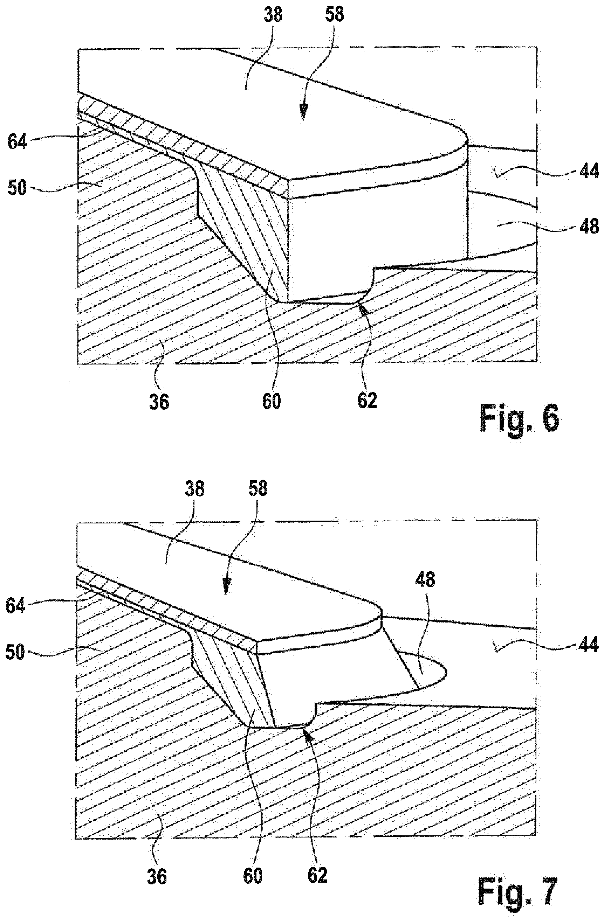

Die Fig. 6 zeigt schematisch ein weiteres optisches Element 58, das auf einen Lentikularbereich 50 gefügt ist. Bei dem weiteren optischen Element 58 kann es sich beispielsweise um eine Folie oder eine Schale handeln. In den folgenden Beispielen ist das weitere optische Element 58 lediglich beispielhaft eine Folie. Die Fig. 6 zeigt eine schematische Ansicht des Basislinsenelements 36, des Lentikularbereichs 50 und der in die Oberfläche 44 eingebrachten langgestreckten Ausnehmung 48, die den Lentikularbereich 50 zumindest teilweise umgibt. Auf den Lentikularbereich 50 ist mittels eines Klebstoffabschnitts 60 eine Folie 58 gefügt. Der Klebstoffabschnitt 60 erstreckt sich in einem Spalt 64 zwischen dem Lentikularbereich 50 und der Folie 58. Die Folie 58 bildet dabei das zweite Element 38 der Linsenanordnung 12. In der dargestellten Ansicht ist der Klebstoff bereits ausgehärtet und erstreckt sich aus dem Spalt 64 hinaus in die langgestreckte Ausnehmung 48 hinein. Ein Querschnittsprofil 62 der langgestreckten Ausnehmung 48 ist mit 62 bezeichnet. Das Querschnittsprofil 62 ist konstant und ändert sich über die Längserstreckung der langgestreckten Ausnehmung 48 nicht. Wie dargestellt, kann sich die Folie 58 dabei über den Lentikularbereich 50 hinaus erstrecken und wird vollständig durch den Klebstoffabschnitt 60 gestützt. Es ist auf diese Weise unkritisch, eine zu große Menge von Klebstoff aufzutragen, so dass dieser aus dem Spalt 64 heraustritt. Der Klebstoff kann in die langgestreckte Ausnehmung 48 abfließen und somit die Folie 58 vollflächig stützen.

Die Fig. 7 zeigt eine Ausgestaltung, in der verglichen mit der Fig. 6 ein höheres Maß an Klebstoff in den Spalt 64 eingebracht wurde. Folglich erstreckt sich der Klebstoffabschnitt 60 weiter in die langgestreckte Ausnehmung 48 hinein. Es tritt jedoch keine Verunreinigung der Oberfläche 44 auf, da der Klebstoff beim Applizieren in die langgestreckte Ausnehmung 48 fließen und sich auch in Längsrichtung der langgestreckten Ausnehmung 48 gleichmäßig verteilen kann. Die gleichmäßige Applikation des Klebstoffs wird somit wesentlich vereinfacht. Im letztendlich gefügten Zustand ergibt sich somit, dass die Folie 58 gleichmäßig durch den Klebstoffabschnitt 60 über ihre gesamte Fläche gestützt wird.

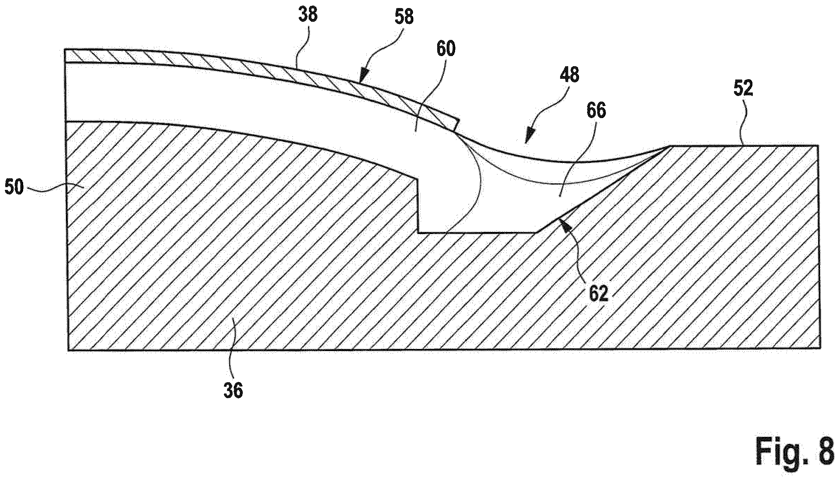

Die Fig. 8 zeigt eine weitere Querschnittsansicht des Querschnittsprofils 62 der langgestreckten Ausnehmung 48. In dieser Ausgestaltung füllt der Klebstoffabschnitt 60 die gesamte langgestreckte Ausnehmung 48 auf. Es kann grundsätzlich vorgesehen sein, nach dem Fügen der Folie 58 auf das Basislinsenelement 36 eine zusätzliche von Klebstoff in die langgestreckte Ausnehmung 48 zu applizieren, um diese gewollt vollständig zu befüllen. Für nach dem Fügen erfolgende Prozessschritte, insbesondere unter Einsatz weiterer Fluide kann dies vorteilhaft sein. Es können sich diese dann nicht mehr in den nur teilweise gefüllten langgestreckten Ausnehmungen sammeln. Daher kann nach dem Fügen der Folie die langgestreckte Ausnehmung 48 mit Klebstoff gefüllt werden, so dass ein kontinuierlicher Übergang oder ein Übergang mit sehr großem Radius von der Folie 58 in den Randbereich 52 erfolgt, wie in der Fig. 8 dargestellt ist. Durch das so gebildete Reservoir an Klebstoff in der langgestreckten Ausnehmung kann des Weiteren verhindert werden, dass im Falle eines Zurückziehens des Klebstoffs, zum Beispiel infolge von Schrumpfung, thermische Ausdehnung, Luft in den Fügespalt eindringt. Der zu viel aufgetragene Klebstoff kann also ein Ausgleichreservoir bilden.

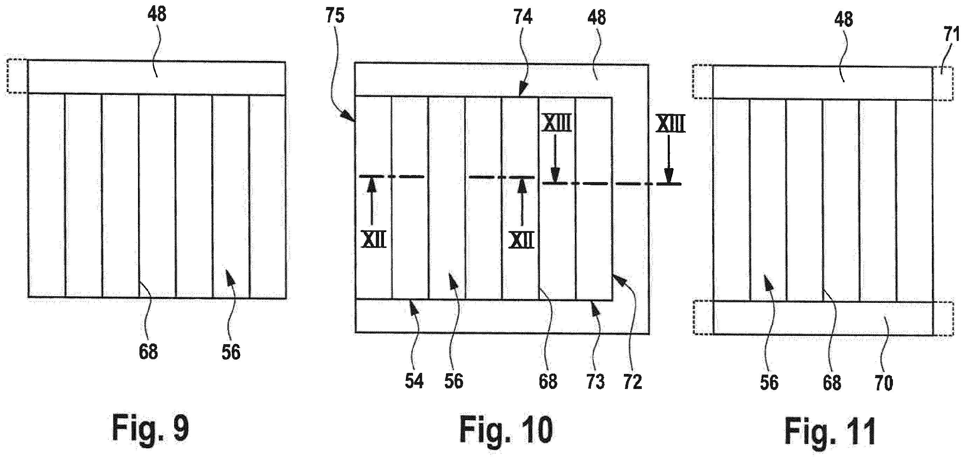

In den Figuren 9 bis 11 sind weitere Ausgestaltungsmöglichkeiten zur Nutzung einer langgestreckten Ausnehmung 48 gezeigt, in dem dargestellten Ausführungsbeispiel im Zusammenhang mit einem Fresnel-Oberflächenbereich. In den Figuren 9 bis 11 sind schematisch die Ausrichtungen von Fresnel-Flankenbereichen 68 dargestellt. Wie zu erkennen ist, muss die langgestreckte Ausnehmung 48 den Fresnel-Oberflächenbereich nicht vollständig umgeben. Wichtig ist zunächst lediglich, dass die Fresnel-Flankenbereiche 68, bzw. die zwischen den Fresnel-Flankenbereichen angeordneten Vertiefungen oder Einschnittbereiche mittels der langgestreckten Ausnehmung 48 verbunden werden. Daher kann es ausreichend sein, wenn sich die langgestreckte Ausnehmung 48 lediglich auf einer Seite des Fresnel-Oberflächenbereichs 56 im Wesentlichen senkrecht zu den Fesnel-Flankenbereichen 68 erstreckt und die Einschnittbereiche verbindet. Wie der Fig. 11 zu entnehmen ist, können neben der langgestreckten Ausnehmung 48 auch eine weitere zweite langgestreckte Ausnehmung 70 bereitgestellt sein, die mit der langgestreckten Ausnehmung 48 nicht verbunden ist. Die beiden langgestreckten Ausnehmungen 48 und 70 können dann einander bezüglich des Fresnel-Oberflächenbereichs 56 gegenüberliegend angeordnet sein. Die langestreckte Ausnehmung 48 und/oder die langgestreckte Ausnehmung 70 können über den Fresnel-Oberflächenbereich 56 hinausgehen, wie durch die gestrichelten Bereiche 71 gezeigt ist. Dies kann das Entweichen von Luft verbessern.

Insbesondere können jedoch die langgestreckte Ausnehmungen 48 angrenzend an drei Seiten des Fresnel-Oberflächenbereichs 56 ausgebildet sein. In der in den Figuren 9 bis 11 dargestellten Draufsicht kann die Umfangskontur des Fresnel-Oberflächenbereichs 56 insbesondere rechteckig sein. Entlang von drei Seiten dieses Rechtecks, 72, 73, 74 kann dann die langgestreckte Ausnehmung 48 bereitgestellt sein. Eine offene Seite 75 kann dann beispielsweise zum Einbringen des Strahlengangs 20 auf den Fresnel-Oberflächenbereich 56 dienen, um den Auskoppelabschnitt 30 bereitzustellen. Mittels der in Fig. 10 dargestellten Ausführungsform ist somit möglich, die offenen Enden der Fresnel-Flankenbereiche 68 auf beiden Seiten zu verbinden und auf diese Weise ein Füllen des Fresnel-Oberflächenbereichs 56 mit einem Füllmaterial deutlich zu vereinfachen.

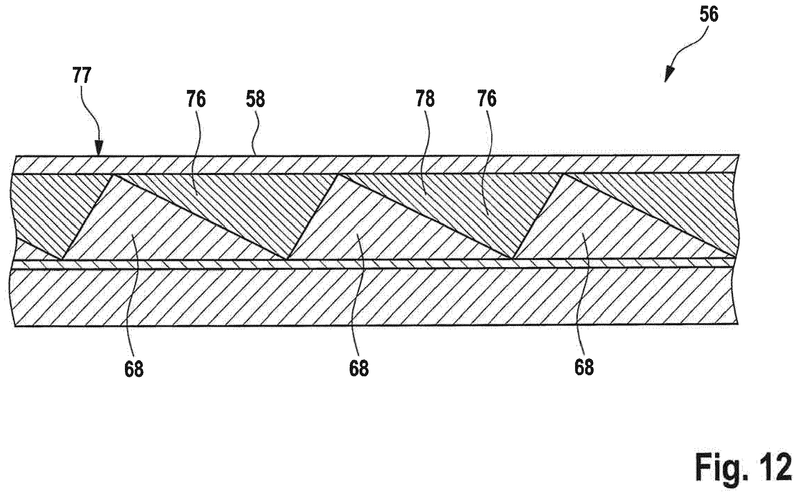

Die Fig. 12 zeigt eine schematische Querschnittsansicht des Fresnel-Oberflächenbereichs 56 entlang der Linie XII-XII. Die Fresnel-Flankenbereiche sind im Querschnitt dargestellt und mit dem Bezugszeichen 68 bezeichnet. Werden derartige Oberflächenbereiche aus einem Material herausgebildet, entstehen, folglich zwischen den Fresnel-Flankenbereichen 68 Einschnittbereiche 76. Um wiederum eine glatte Oberfläche, die beispielsweise das Auftragen einer Folie 58 ermöglicht, bereitzustellen, sind die Einschnittbereiche 76 auszufüllen. Ein weiterer Aspekt ist, dass die Einschnittbereiche 76 nicht mit Luft gefüllt sein können, da diese einen von den Fresnel-Flankenbereichen 68 unterschiedlichen Brechungsindex aufweisen. Dies würde für ungewünschte Medienübergänge in der Linsenanordnung 12 sorgen, die das optische Design erschweren würden. Daher kann vorgesehen sein, die Einschnittbereiche 76 mit einem Füllmaterial zu füllen, das im Brechungsindex identisch zu dem der Fresnel-Flankenbereiche 68 ist. Die Fresnel-Flankenbereiche 68 können dann beispielsweise beschichtet sein, um gewünschte reflektive Eigenschaften bereitzustellen. Sie können jedoch auch unbeschichtet ausgebildet sein. Grundsätzlich ist es darüber hinaus auch möglich, das Füllmaterial mit einem gezielt anderen Brechungsindex von den Fresnel-Flankenbereichen 68 bereitzustellen, um an dem so erzielten Medienübergang zwischen den Fresnel-Flankenbereichen 68 und den Einschnittbereichen 76 entsprechende reflektive Eigenschaften zu erzeugen.

Bei dem Auffüllen der Einschnittbereiche 76 mittels des Füllmaterials können sich jedoch unter Umständen Lufteinschlüsse bilden, insbesondere an einem Anfang und an einem Ende. Des Weiteren ist es relativ mühsam und schwierig, jeden Einschnittbereich einzeln zu füllen. Das Verbinden der Einschnittbereiche mittels der langgestreckten Ausnehmung 48 ermöglicht es daher, sämtliche Lufteinschlüsse zu vermeiden, indem die Luft seitlich an den Seiten 73 bzw. 74 aus den Einschnittbereichen 76 herausgedrückt wird. Auch kann ein zu viel appliziertes Füllmaterial über die langgestreckten Ausnehmungen 48 zwischen den einzelnen Einschnittbereichen ausgeglichen werden.

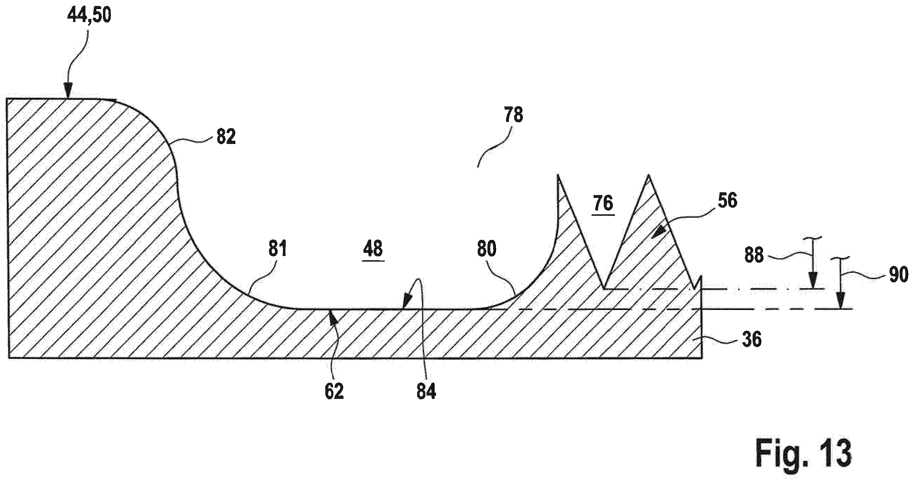

Die Fig. 13 zeigt ein mögliches Querschnittprofil für eine langgestreckte Ausnehmung zwischen einem Fresnel-Oberflächenbereich 56 und einem Lentikularbereich 50. Die Einschnittbereiche 76 weisen eine Tiefe 88 auf. Die langgestreckte Ausnehmung 48 weist eine Tiefe 90 auf. Von welchem Niveau diese Tiefen 88, 90 gemessen werden, ist im Grunde nicht relevant. Dieses kann von dem Niveau der ersten Oberfläche 44 oder aber von einer Spitze der Fresnel-Flankenbereiche 68 erfolgen. Es kann sich die langgestreckte Ausnehmung 48 tiefer in das Basislinsenelement 36 hinein erstreckt als die Einschnittbereiche 76 oder aber auf dasselbe Niveau. Auf diese Weise ist sichergestellt, dass sich an einem Grund der Einschnittbereiche 76 keinerlei Lufteinschlüsse bilden können, da ein Nutgrund 74 der langgestreckten Ausnehmung 48 tiefer liegt. Des Weiteren ist die langgestreckte Ausnehmung 48 bzw. deren Querschnittsprofil 62 vorzugsweise mit Radien 80, 81, 82 ausgebildet, um möglichst keinerlei scharfkantige Ecken zu bilden, in denen sich wiederum Lufteinschlüsse bilden könnten, indem das Fließverhalten des Füllmaterials oder Klebstoffs ein vollflächiges Benetzen verhindert. Beispielsweise kann vorgesehen sein, dass ein Radius der Radien 80, 81, 82 ≥ 0,05 mm ausgebildet ist. Ist die langgestreckte Ausnehmung 48 dann mit dem Füllmaterialabschnitt 78 gefüllt, kann auf diese Weise ein wesentlich kontinuierlicher Übergang zwischen dem Fresnel-Oberflächenbereich 56 und dem Lentikularbereich 50 bereitgestellt werden. Auf diese Weise kann auch ein optischer Wirkungssprung für den Betrachter 22 im Wesentlichen vermieden werden.

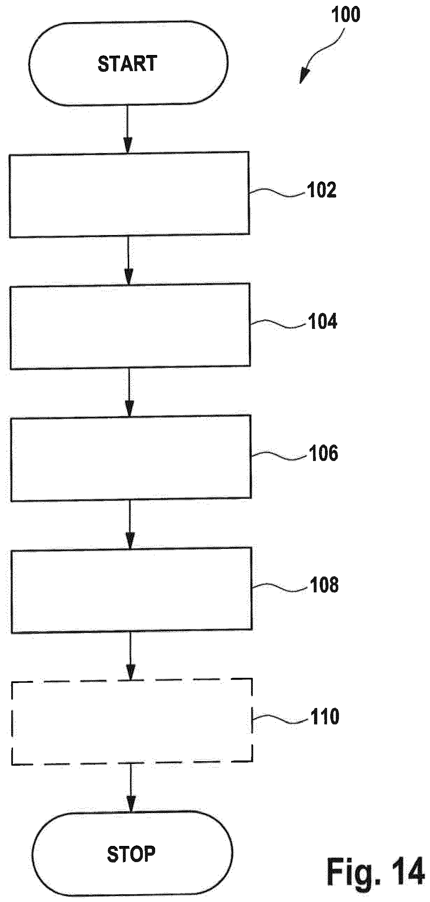

Die Fig. 14 zeigt ein schematisches Ablaufdiagramm eines Verfahrens 100 zum Herstellen einer Linsenanordnung.

Nach einem Schritt 102 erfolgt zunächst das Bereitstellen des Basislinsenelements 36 mit der ersten Oberfläche 44, wobei die erste Oberfläche 44 den Lentikularbereich 50 und die langgestreckte Ausnehmung 48 aufweist, und wobei die langgestreckte Ausnehmung 48 den Lentikularbereich 50 zumindest teilweise umgibt. Die langgestreckte Ausnehmung 48 kann angrenzend an den Lentikularbereich 50 verlaufen. Anschließend erfolgt der Schritt 104 des Aufbringens eines flüssigen Klebstoffs auf den Lentikularbereich 50, so dass der Klebstoff den Lentikularbereich vollständig bedeckt und sich bis in die langgestreckte Ausnehmung erstreckt und/oder des Aufbringens des flüssigen Klebstoffs auf ein den Lentikularbereich vollständig bedeckendes weiteres optisches Element 58, insbesondere eine Schale oder eine Folie.

Dann wird in einem Schritt 106 das den Lentikularbereich 50 vollständig bedeckende weitere optische Element 58, auf den Klebstoff aufgebracht. In einem Schritt 108 härtet der Klebstoff dann aus, so dass der Fügevorgang abgeschlossen ist.

Optional kann des Weiteren ein Schritt des Füllens 110 der langgestreckten Ausnehmung 48 mit dem Klebstoff erfolgen, um einen im Wesentlichen kontinuierlichen Übergang zwischen dem Lentikularbereich und dem Randbereich 52 bereitzustellen.

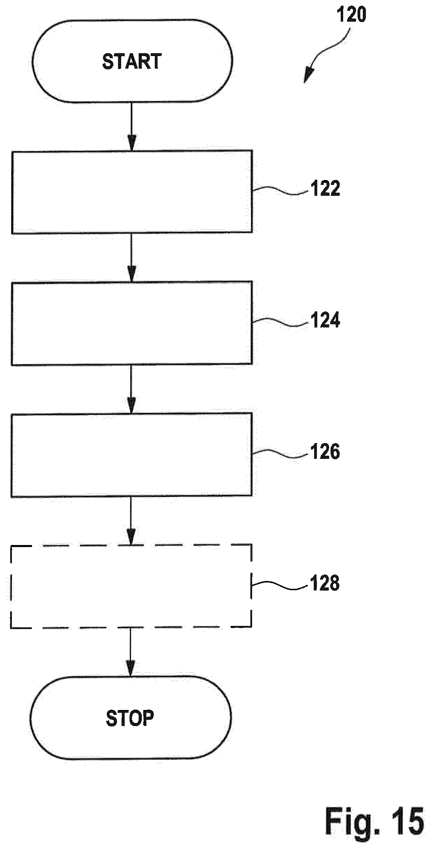

Die Fig. 15 zeigt ein schematisches Ablaufdiagramm eines weiteren Verfahrens zum Herstellen einer Linsenanordnung. Zunächst erfolgt ein Schritt des Bereitstellens 122 des Basislinsenelements 36 mit einer Oberfläche, wobei die Oberfläche einen Fresnel-Oberflächenbereich 56 mit einer Fresnel-Oberflächenstruktur 77 aufweist. Der Fresnel-Oberflächenbereich 56 weist eine Mehrzahl von Fresnel-Flankenerhebungen 68 mit dazwischenliegenden Einschnittbereichen 76 zur Bereitstellung der Fresnel-Oberflächenstruktur 77 auf. Die erste Oberfläche weist eine langgestreckte Ausnehmung 48 auf, wobei die langgestreckte Ausnehmung 48 angrenzend an die Fresnel-Oberflächenstruktur 77 verläuft und die Einschnittbereiche 76 miteinander verbindet. Insbesondere ist dabei die Tiefe 90 der Ausnehmung 48 in die Oberfläche größer als die Tiefe 88 der Einschnittbereiche 76 in die Oberfläche.

Dann erfolgt das Füllen der Einschnittbereiche mit einem flüssigen Füllmaterial. Bei dem Füllmaterial kann es sich auch um einen Klebstoff handeln. Dieser wirkt so lange, bis das Füllmaterial die Einschnittbereiche vollständig ausfüllt und sich darüber hinaus in die langgestreckte Ausnehmung erstreckt. Auf diese Weise ist sichergestellt, dass sämtliche Luft in den Einschnittbereichen seitlich in die langgestreckte Ausnehmung herausgedrückt ist. Dann erfolgt ein Aushärten 126 des Füllmaterials.

Anschließend kann dann noch ein Schritt des Schleifens und/oder Polierens und/oder Fräsens 128 des Füllmaterials erfolgen, so dass eine Oberfläche des Füllmaterials und eine Oberfläche des Lentikularbereichs kontinuierlich ineinander übergehen. Auch ein Abformen des Klebstoffs gegen eine entfernbare Formschale ist denkbar. Auf diese Weise kann dann wieder eine glatte bzw. kontinuierliche Oberfläche bereitgestellt sein. Auf diese kann dann beispielsweise die Folie oder Schale oder das weitere optische Element 58 appliziert werden.

## Patentansprüche

1. Linsenanordnung (12), insbesondere Brillenglasanordnung, mit einem Basislinsenelement (36), wobei das Basislinsenelement (36) eine erste Oberfläche (44) aufweist, wobei die erste Oberfläche (44) einen Lentikularbereich (50) und einen Randbereich (52) aufweist, wobei der Randbereich (52) den Lentikularbereich (50) umgibt, wobei die erste Oberfläche (44) eine langgestreckte Ausnehmung (48) aufweist, wobei die langgestreckte Ausnehmung (48) den Lentikularbereich (50) zumindest teilweise umgibt, wobei die langgestreckte Ausnehmung (48) angrenzend an Lentikularbereich (50) verläuft, wobei der Lentikularbereich (50) mit einem weiteren optischen Element (58), insbesondere einer Schale oder einer Folie, vollständig bedeckt ist, **dadurch gekennzeichnet, dass** das weitere optische Element (58) an dem Lentikularbereich (50) mittels eines Klebstoffabschnitts (60) angebracht ist, wobei der Klebstoff den Lentikularbereich (50) vollständig bedeckt, Z und wobei sich der Klebstoffabschnitt (60) über den Lentikularbereich (50) hinaus bis in die langgestreckte Ausnehmung (48) erstreckt, so dass durch ein gebildetes Ausgleichsreservoir an zu viel aufgetragenem Klebstoff in der langgestreckten Ausnehmung verhindert wird, dass im Falle eines Zurückziehens des Klebstoffs, zum Beispiel infolge von Schrumpfung oder thermischer Ausdehnung, Luft in einen Fügespalt eindringt.

2. Linsenanordnung (12) nach Anspruch 1, **dadurch gekennzeichnet, dass** die langgestreckte Ausnehmung (48) den Lentikularbereich (50) vollständig umgibt.

3. Linsenanordnung (12) nach Anspruch 1 oder 2, **dadurch gekennzeichnet, dass** der Klebstoffabschnitt (60) die langgestreckte Ausnehmung (48) vollständig ausfüllt.

4. Linsenanordnung (12) nach einem der Ansprüche 1 bis 3, **dadurch gekennzeichnet, dass** die langgestreckte Ausnehmung (48) eine erste langgestreckte Ausnehmung (48) ist, und wobei die erste Oberfläche (44) des Weiteren eine zweite langgestreckte Ausnehmung (70) aufweist, und wobei die zweite langgestreckte Ausnehmung (70) angrenzend an den Lentikularbereich (50) gegenüberliegend zu der ersten langgestreckten Ausnehmung (48) verläuft.

5. Linsenanordnung (12) nach einem der Ansprüche 1 bis 4, **dadurch gekennzeichnet, dass** in dem Lentikularbereich (50) ein Fresnel-Oberflächenbereich (56) mit einer Fresnel-Oberflächenstruktur (77) angeordnet ist, wobei die langgestreckte Ausnehmung (48), die angrenzend an Lentikularbereich (50) verläuft und den Lentikularbereich (50) zumindest teilweise umgibt, eine erste langgestreckte Ausnehmung (48) ist, und wobei angrenzend an den Fresnel-Oberflächenbereich (56) eine zweite langgestreckte Ausnehmung (48) verläuft und den Fresnel-Oberflächenbereich (56) zumindest teilweise umgibt, vorzugsweise wobei der Fresnel-Oberflächenbereich (56) von einem Füllmaterialabschnitt (78) bedeckt ist, wobei eine Oberfläche des Füllmaterialabschnitts (78) und eine Oberfläche des Lentikularbereichs (50) kontinuierlich ineinander übergehen.

6. Linsenanordnung (12) nach einem der Ansprüche 1 bis 5, **dadurch gekennzeichnet, dass** das Basislinsenelement (36) aus einem Basislinsenmaterial ausgebildet ist, wobei der Füllmetrialabschnitt aus einem von dem Basislinsenmaterial verschiedenen Füllmaterial ausgebildet ist, und wobei ein Brechungsindex des Basislinsenmaterials und ein Brechungsindex des Füllmaterials bei derselben Referenzwellenlänge identisch sind.

7. Anzeigevorrichtung (10) mit zumindest einer Linsenanordnung (12) nach einem der Ansprüche 1 bis 6.

8. Verfahren zum Herstellen einer Linsenanordnung (12), mit den folgenden Schritten:
• Bereitstellen (102) eines Basislinsenelements (36) mit einer ersten Oberfläche (44), wobei die erste Oberfläche (44) einen Lentikularbereich (50), einen Randbereich (52) und eine langgestreckte Ausnehmung (48) aufweist, wobei der Randbereich (52) den Lentikularbereich (50) umgibt, wobei die langgestreckte Ausnehmung (48) den Lentikularbereich (50) zumindest teilweise umgibt, und wobei die langgestreckte Ausnehmung (48) angrenzend an Lentikularbereich (50) verläuft;
• Aufbringen (104) eines flüssigen Klebstoffs auf den Lentikularbereich (50), so dass der Klebstoff den Lentikularbereich (50) vollständig bedeckt und sich bis in die langgestreckte Ausnehmung (48) erstreckt, und/oder Aufbringen (104) des flüssigen Klebstoffs auf ein den Lentikularbereich (50) vollständig bedeckendes weiteres optisches Element (58), insbesondere eine Schale oder eine Folie;
• Aufbringen (106) des den Lentikularbereich (50) vollständig bedeckenden weiteren optischen Elements (58), insbesondere der Schale oder der Folie, auf das Basislinsenelement (36), wobei durch ein gebildetes Ausgleichsreservoir an zu viel aufgetragenem Klebstoff in der langgestreckten Ausnehmung verhindert wird, dass im Falle eines Zurückziehens des Klebstoffs, zum Beispiel infolge von Schrumpfung oder thermischer Ausdehnung, Luft in einen Fügespalt eindringt; und
• Aushärten (108) des Klebstoffs.

9. Verfahren nach Anspruch 8, **dadurch gekennzeichnet, dass** nach dem Schritt des Aufbringens des flüssigen Klebstoffs auf den Lentikularbereich (50) ein weiterer Schritt des Füllens (110) der langgestreckten Ausnehmung (48) mit dem Klebstoff erfolgt.

## Claims

1. Lens arrangement (12), in particular spectacle lens arrangement, comprising a base lens element (36), the base lens element (36) having a first surface (44), the first surface (44) having a lenticular region (50) and an edge region (52), the edge region (52) encompassing the lenticular region (50), the first surface (44) having an elongate recess (48), the elongate recess (48) at least partially encompassing the lenticular region (50), the elongate recess (48) running adjacent to the lenticular region (50), the lenticular region (50) being completely covered by a further optical element (58), in particular a shell or a film, **characterized in that** the further optical element (58) is attached to the lenticular region (50) by means of an adhesive portion (60), with the adhesive completely covering the lenticular region (50) and the adhesive portion (60) extending beyond the lenticular region (50) into the elongate recess (48) such that a formed compensation reservoir of excess applied adhesive in the elongate recess prevents air from entering a joining gap in the case of a retreat of the adhesive, for example as a consequence of shrinkage or thermal expansion.

2. Lens arrangement (12) according to Claim 1, **characterized in that** the elongate recess (48) fully encompasses the lenticular region (50).

3. Lens arrangement (12) according to Claim 1 or 2, **characterized in that** the adhesive portion (60) completely fills the elongate recess (48).

4. Lens arrangement (12) according to any one of Claims 1 to 3, **characterized in that** the elongate recess (48) is a first elongate recess (48), the first surface (44) moreover having a second elongate recess (70) and the second elongate recess (70) running adjacent to the lenticular region (50), opposite to the first elongate recess (48).

5. Lens arrangement (12) according to any one of Claims 1 to 4, **characterized in that** a Fresnel surface region (56) with a Fresnel surface structure (77) is arranged in the lenticular region (50), the elongate recess (48), which runs adjacent to the lenticular region (50) and at least partially encompasses the lenticular region (50), being a first elongate recess (48) and a second elongate recess (48) running adjacent to the Fresnel surface region (56) and at least partially encompassing the Fresnel surface region (56), with the Fresnel surface region (56) preferably being covered by a filler material portion (78), with a surface of the filler material portion (78) and a surface of the lenticular region (50) merging into one another in continuous fashion.

6. Lens arrangement (12) according to any one of Claims 1 to 5, **characterized in that** the base lens element (36) is formed from a base lens material, with the filler material portion being formed from a filler material that differs from the base lens material and with a refractive index of the base lens material and a refractive index of the filler material being identical at the same reference wavelength.

7. Display apparatus (10) comprising at least one lens arrangement (12) according to any one of Claims 1 to 6.

8. Method for producing a lens arrangement (12), including the following steps:
• providing (102) a base lens element (36) with a first surface (44), the first surface (44) having a lenticular region (50), an edge region (52) and an elongate recess (48), the edge region (52) encompassing the lenticular region (50), the elongate recess (48) at least partially encompassing the lenticular region (50) and the elongate recess (48) running adjacent to the lenticular region (50);
• applying (104) a liquid adhesive onto the lenticular region (50) such that the adhesive completely covers the lenticular region (50) and extends into the elongate recess (48) and/or applying (104) the liquid adhesive onto a further optical element (58), in particular a shell or a film, which completely covers the lenticular region (50);
• applying (106) the further optical element (58), in particular the shell or the film, which completely covers the lenticular region (50) onto the base lens element (36), with a formed compensation reservoir of excess applied adhesive in the elongate recess preventing air from entering a joining gap in the case of a retreat of the adhesive, for example as a consequence of shrinkage or thermal expansion; and
• curing (108) the adhesive.

9. Method according to Claim 8, **characterized in that** there is a further step of filling (110) the elongate recess (48) with the adhesive following the step of applying the liquid adhesive onto the lenticular region (50).

## Revendications

1. Agencement de lentille (12), notamment agencement de verre de lunettes, avec un élément de lentille de base (36), l'élément de lentille de base (36) présentant une première surface (44), la première surface (44) présentant une zone lenticulaire (50) et une zone de bordure (52), la zone de bordure (52) entourant la zone lenticulaire (50), la première surface (44) présentant un évidement allongé (48), l'évidement allongé (48) entourant au moins partiellement la zone lenticulaire (50), l'évidement allongé (48) s'étendant de manière adjacente à la zone lenticulaire (50), la zone lenticulaire (50) étant entièrement recouverte d'un autre élément optique (58), notamment d'une coque ou d'une feuille, **caractérisé en ce que** l'autre élément optique (58) est fixé à la zone lenticulaire (50) au moyen d'une section d'adhésif (60), l'adhésif recouvrant entièrement la zone lenticulaire (50), et la section d'adhésif (60) s'étendant au-delà de la zone lenticulaire (50) jusque dans l'évidement allongé (48), de telle sorte qu'un réservoir de compensation formé par une quantité excessive d'adhésif appliqué dans l'évidement allongé empêche que de l'air pénètre dans un espace d'assemblage en cas de retrait de l'adhésif, par exemple à la suite d'une rétraction ou d'une dilatation thermique.

2. Agencement de lentille (12) selon la revendication 1, **caractérisé en ce que** l'évidement allongé (48) entoure entièrement la zone lenticulaire (50).

3. Agencement de lentille (12) selon la revendication 1 ou 2, **caractérisé en ce que** la section d'adhésif (60) remplit entièrement l'évidement allongé (48).

4. Agencement de lentille (12) selon l'une quelconque des revendications 1 à 3, **caractérisé en ce que** l'évidement allongé (48) est un premier évidement allongé (48), et dans lequel la première surface (44) présente en outre un deuxième évidement allongé (70), et dans lequel le deuxième évidement allongé (70) s'étend de manière adjacente à la zone lenticulaire (50) à l'opposé du premier évidement allongé (48).

5. Agencement de lentille (12) selon l'une quelconque des revendications 1 à 4, **caractérisé en ce qu'**une zone de surface de Fresnel (56) avec une structure de surface de Fresnel (77) est agencée dans la zone lenticulaire (50), l'évidement allongé (48) qui s'étend de manière adjacente à la zone lenticulaire (50) et qui entoure au moins partiellement la zone lenticulaire (50) étant un premier évidement allongé (48), et un deuxième évidement allongé (48) s'étendant de manière adjacente à la zone de surface de Fresnel (56) et entourant au moins partiellement la zone de surface de Fresnel (56), de préférence la zone de surface de Fresnel (56) étant recouverte d'une section de matériau de remplissage (78), une surface de la section de matériau de remplissage (78) et une surface de la zone lenticulaire (50) se raccordant l'une à l'autre de manière continue.

6. Agencement de lentille (12) selon l'une quelconque des revendications 1 à 5, **caractérisé en ce que** l'élément de lentille de base (36) est formé d'un matériau de lentille de base, la section de matériau de remplissage étant formée d'un matériau de remplissage différent du matériau de lentille de base, et un indice de réfraction du matériau de lentille de base et un indice de réfraction du matériau de remplissage étant identiques à la même longueur d'onde de réflexion.

7. Dispositif d'affichage (10) avec au moins un agencement de lentille (12) selon l'une quelconque des revendications 1 à 6.

8. Procédé de fabrication d'un agencement de lentille (12), avec les étapes suivantes :
- la fourniture (102) d'un élément de lentille de base (36) avec une première surface (44), la première surface (44) présentant une zone lenticulaire (50), une zone de bordure (52) et un évidement allongé (48), la zone de bordure (52) entourant la zone lenticulaire (50), l'évidement allongé (48) entourant au moins partiellement la zone lenticulaire (50), et l'évidement allongé (48) s'étendant de manière adjacente à la zone lenticulaire (50) ;
- l'application (104) d'un adhésif liquide sur la zone lenticulaire (50), de telle sorte que l'adhésif recouvre entièrement la zone lenticulaire (50) et s'étend jusque dans l'évidement allongé (48), et/ou l'application (104) de l'adhésif liquide sur un autre élément optique (58), notamment une coque ou une feuille, recouvrant entièrement la zone lenticulaire (50) ;
- l'application (106) de l'autre élément optique (58), notamment de la coque ou de la feuille, recouvrant entièrement la zone lenticulaire (50), sur l'élément de lentille de base (36), un réservoir de compensation formé par une quantité excessive d'adhésif appliqué dans l'évidement allongé empêchant que de l'air pénètre dans un espace d'assemblage en cas de retrait de l'adhésif, par exemple à la suite d'une rétraction ou d'une dilatation thermique ; et
- le durcissement (108) de l'adhésif.

9. Procédé selon la revendication 8, **caractérisé en ce qu'**après l'étape d'application de l'adhésif liquide sur la zone lenticulaire (50), une autre étape de remplissage (110) de l'évidement allongé (48) avec l'adhésif est effectuée.
